# EUROPÄISCHE PATENTANMELDUNG

(11) **EP 2 840 216 A1**
(43) Veröffentlichungstag der Anmeldung: **25.02.2015**
(21) Anmeldenummer: 14002463.9
(22) Anmeldetag: 16.07.2014
(51) Int. Cl.: E05F 11/53, B60R 21/12

(54) **Fahrerschutzkabine eines Fahrzeugs des öffentlichen Personentransports**

(30) Priorität: 20.08.2013 DE 202013007389 U
(71) Anmelder: Hübner GmbH & Co. KG, 34123 Kassel (DE)
(72) Erfinder: Hübsch, Daniel, 34119 Kassel (DE); Rosenthal, Thomas, 34119 Kassel (DE); Sprenger, Thorsten, 34253 Lohfelden (DE)
(74) Vertreter: Walther, Walther & Hinz GbR

(57) **Zusammenfassung**

Fahrerschutzkabine ( 10 ) eines Fahrzeugs des öffentlichen Personentransports, z. B. eines Busses, wobei die Fahrerschutzkabine ( 10 ) auf der dem Eingang des Fahrzeugs zugewandten Seite mindestens eine Wand ( 15 ) aufweist, wobei an der Wand ( 15 ) mindestens eine Schutzscheibe ( 20 ) durch mindestens einen Teleskopauszug ( 21 , 23 ) parallel zu der Wand verschieblich angeordnet ist, wobei der mindestens eine Teleskopauszug ( 21 , 23 ) eine Arretiereinrichtung ( 27 ) zur Fixierung der Schutzscheibe ( 20 ) in unterschiedlichen Stellungen relativ zur Wand ( 15 ) aufweist, wobei die Arretiereinrichtung ( 27 ) mindestens zwei Zahnstangen ( 29 , 30 ) umfasst, die miteinander in Eingriff bringbar sind.

## Beschreibung

Die Erfindung betrifft eine Fahrerschutzkabine eines Fahrzeuges des öffentlichen Personentransports, z. B. eines Busses, wobei die Kabine auf der dem Eingang des Fahrzeugs zugewandten Seite mindestens eine Wand aufweist, wobei an der Wand mindestens eine Schutzscheibe durch mindestens einen Teleskopauszug parallel zu der feststehenden Wand verschieblich angeordnet ist, wobei der mindestens eine Teleskopauszug eine Arretiereinrichtung zur Fixierung der Schutzscheibe in unterschiedlichen Stellungen relativ zur Wand aufweist.

Die Definition der Wand ist wie folgt: Die Wand kann feststehend ausgebildet sein oder auch beweglich. Eine bewegliche Wand ist beispielsweise eine Wand, die Bestandteil der Fahrertür ist. Die Fahrertür kann hierbei vorne oder hinten im Bereich der Kabine angeschlagen sein. Eine solche mit der Fahrertür verbundene Wand ist schwenkbeweglich und auch Gegenstand des Schutzes.

In der Vergangenheit und dies war auch in der Presse des Weiteren zu lesen, wurden Fahrer von Fahrzeugen des öffentlichen Personennahverkehrs und hier insbesondere auch von Bussen, Opfer von Angriffen durch Passagiere. Die Gefahr von Angriffen besteht insbesondere in den späten Abend- oder Nachtstunden, insbesondere wenn die Passagiere zum Teil alkoholisiert das entsprechende Fahrzeug betreten.

Gegenstand der Erfindung ist eine Fahrerschutzkabine in einem solchen Fahrzeug des öffentlichen Personentransportverkehrs, um den Fahrer gegenüber Angriffen von Passagieren zu schützen. Insbesondere soll sowohl der Schutz des Fahrers ermöglicht werden, als auch dennoch die Möglichkeit zur Kommunikation mit den Passagieren beibehalten werden. Beispielsweise soll insofern die Ausgabe von Fahrkarten, die Kontrolle von Fahrkarten aber auch die Unterhaltung mit den Passagieren möglich bleiben.

In diesem Zusammenhang ist aus der AU-A-33998/93 eine Fahrerschutzkabine bekannt, wobei die Kabine auf der dem Eingang des Fahrzeugs zugewandten Seite eine Tür aufweist, wobei die Tür ein Schiebeelement aufweist, das durch einen Teleskopauszug mit der Tür in Verbindung steht. Zum Verfahren des Schiebeelements ist ein Pneumatikzylinder vorgesehen.

Aus der EP 2 428 411 B1 ist ebenfalls eine Fahrerschutzkabine bekannt, wobei mehrere Schiebeelemente vorgesehen sind, die durch einen Teleskopauszug miteinander in Verbindung stehen. Mit einer Mehrzahl von solchen Schiebeelementen besteht für den Fahrer die Möglichkeit, je nach Bedarf und Gefährdungssituation, die Öffnung komplett oder auch nur partiell zu verschließen. Es bleibt dann immer noch die Möglichkeit zur Kommunikation mit dem Passagier. Das heißt, durch die Verwendung einzelner Schiebeelemente, die durch den Teleskopauszug miteinander in Verbindung stehen, kann die Öffnung segmentweise freigegeben werden. Hierzu weist der Teleskopauszug mehrere Teleskopglieder auf. Die einzelnen Teleskopglieder sind untereinander zwangsgekoppelt. Die Zwangskopplung der Teleskopglieder untereinander bedeutet, dass bei Verschiebung eines Teleskopgliedes die anderen Teleskopglieder sich entsprechend verschieben. Das hat aber auch zur Folge, dass bei Blockierung eines der Teleskopglieder der gesamte Teleskopauszug, mithin die Schiebeelemente, blockiert sind.

Der aus der EP 2 428 411 B1 bekannte Teleskopauszug arbeitet sehr zufriedenstellend, es ist jedoch konstruktiv sehr aufwendig, was hohe Kosten bei der Verwirklichung zur Folge hat.

Die der Erfindung zugrunde liegende Aufgabe besteht demzufolge darin, eine Fahrerschutzkabine der eingangs genannten Art bereitzustellen, bei der mindestens eine Schutzscheibe vorgesehen ist, die in konstruktiv einfacher Weise und damit preiswert relativ zu mindestens einer ersten, insbesondere einer feststehenden Wand verschieblich ist, und in nahezu jeder beliebigen Position, d. h. im Wesentlichen stufenlos, feststellbar ist.

Zur Lösung der Aufgabe wird erfindungsgemäß vorgeschlagen, dass die Arretiereinrichtung mindestens zwei Zahnstangen umfasst, die miteinander in Eingriff bringbar sind. Bei der Erfindung wird zunächst davon ausgegangen, dass an einer Wand, beispielsweise in Form einer Glasscheibe, eine Schutzscheibe verschieblich angeordnet ist, wobei die maximale Auszugsweite der Schutzscheibe begrenzt ist durch die Breite der Schutzscheibe. Durch die Erfindung mitumfasst ist allerdings auch eine Ausführungsform, bei der mehrere Schutzscheiben durch mehrere Teleskopauszüge miteinander in Verbindung stehen, wobei diese Mehrzahl an Teleskopauszügen jeweils durch eine Arretiervorrichtung gekennzeichnet sind, die die zuvor bereits genannten mindestens zwei Zahnstangen umfasst.

Durch die Verwendung von Zahnstangen als Teil einer Arretiereinrichtung wird erreicht, dass die damit verbundene Schutzscheibe in nahezu jeder beliebigen Stellung über die Länge der Zahnstangen fixierbar ist.

Vorteilhafte Merkmale und Ausgestaltungen der Erfindung ergeben sich aus den Unteransprüchen.

So ist nach einem besonders vorteilhaften Merkmal vorgesehen, dass der mindestens eine Teleskopauszug mindestens zwei Teleskopschienen umfasst, wobei die eine erste Zahnstange mit der einen ersten Teleskopschiene des Teleskopauszugs und die andere zweite Zahnstange mit der anderen zweiten Teleskopschiene des Teleskopauszugs verbunden ist, wobei zumindest eine der Zahnstangen durch ein Schwenkglied schwenkbeweglich mit der entsprechenden Teleskopschiene des Teleskopauszugs derart verbunden ist, dass bei Verschwenkung der mindestens einen Zahnstange die beiden einander gegenüberliegenden Zahnstangen außer Eingriff miteinander bringbar sind. Hieraus wird deutlich, dass das Lösen der Arretiereinrichtung dadurch erfolgt, dass durch Verschwenken der einen Zahnstange, diese außer Eingriff mit der anderen Zahnstange gebracht wird.

Das Schwenkglied ist hierbei insbesondere als Scharnier und hier insbesondere als Scharnierband ausgebildet, wobei das Schwenkglied unter der Last einer Feder, insbesondere einer Schenkelfeder steht. Das bedeutet, dass beim Verschwenken der einen ersten Zahnstange, um diese außer Eingriff mit der anderen zweiten Zahnstange zu bringen, diese Verschwenkbewegung entgegen der Kraft einer Feder und hier insbesondere der Schenkelfeder erfolgt. Das hat aber auch zur Folge, dass aufgrund der Federkraft die beiden Zahnstangen, nach Abschluss der Schwenkbewegung und nach Verschieben der Teleskopschienen, aufgrund der Kraft der Feder immer wieder in Eingriff gelangen.

Nach einem besonderen Merkmal ist des Weiteren vorgesehen, dass zumindest eine erste Zahnstange eine erste Zahnreihe derart aufweist, dass diese bei einem vorgegebenen Schwenkwinkel außer Eingriff mit der zweiten Zahnreihe der anderen, zweiten Zahnstange gelangt. Dies kann nach einer ersten Ausführungsform dadurch geschehen, dass die zumindest eine erste Zahnstange über einen Teil der Höhe der Zahnreihe eine auf diese Zahnstange zulaufende Schräge aufweist, wobei der Winkel der Schräge etwa dem maximalen Schwenkwinkel der einen ersten Zahnstange entspricht. Hieraus wird deutlich, dass durch diese Schräge an der einen ersten Zahnstange der Schwenkwinkel geringer sein kann, als dies der Fall wäre, wenn die beiden einander gegenüberstehenden Zahnstangen jeweils eine identische Zahnung aufweisen, also insbesondere beide mit einer ebenen, parallel zueinander verlaufenden Verzahnung versehen sind.

Zur Verminderung des Schwenkwinkels kann nach einer zweiten Ausführungsform vorgesehen sein, dass die eine erste Zahnstange eine Zahnreihe aufweist, deren Höhe geringer ist als die der zweiten Zahnstange. Die Zahnreihe der einen ersten Zahnstange ist hierbei nach Art eines Vorsprungs ausgebildet, d. h., dass die Zahnreihe in Richtung auf die andere Zahnstange zu auskragt, wobei hierbei die seitliche Erstreckung des Vorsprungs derart ist, dass bei Verschwenkung der einen ersten Zahnstange die Zahnreihen der beiden Zahnstangen außer Eingriff gelangen. Die Einhaltung kleiner Schwenkwinkel in Bezug auf die eine erste Zahnstange ist insofern von Relevanz, als der seitliche Raum in einer solchen Fahrerschutzkabine durchaus beschränkt ist. Das heißt, dass der Teleskopauszug mit der Arretiereinrichtung nur sehr schmal bauen darf, da anderenfalls die Bewegungsfreiheit des Fahrers stark eingeschränkt wäre. Da zur Verschwenkung der einen ersten Zahnstange ein Hebel erforderlich ist, der von dem Fahrer bedient wird, ist dafür Sorge zu tragen, dass der Schwenkwinkel des Hebels zum außer Eingriff bringen der beiden Zahnstangen immer so ist, dass der Hebel nicht gegen die Schutzscheibe stößt oder in den Innenraum der Fahrerschutzkabine verschwenkt werden muss.

Anhand der Zeichnungen wird die Erfindung nachstehend beispielhaft näher erläutert.

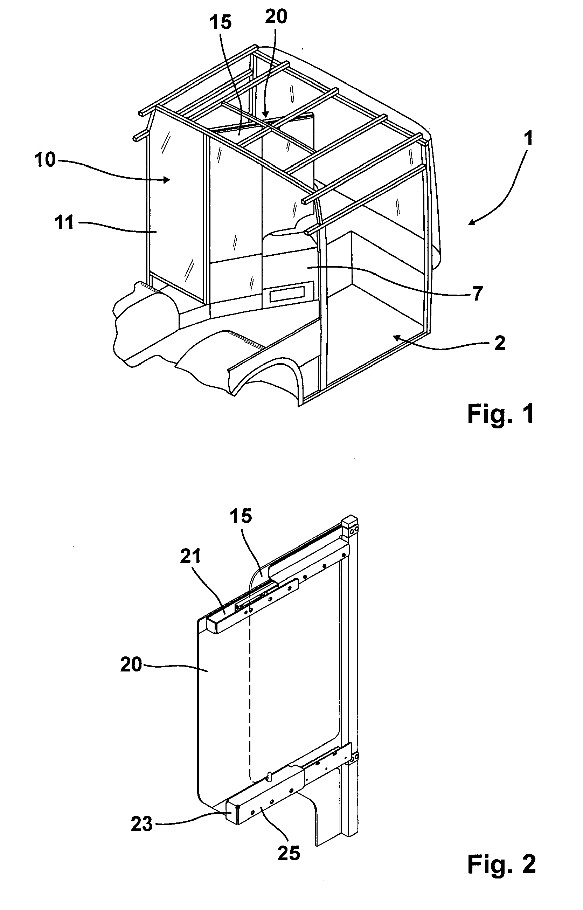

- Fig. 1: zeigt die Fahrerschutzkabine in einer perspektivischen Darstellung;
- Fig. 2: zeigt eine Ansicht von innen auf die feststehende Wand mit der durch den Teleskopauszug befestigten Schutzscheibe;
- Fig. 3: zeigt eine Darstellung gemäß Fig. 2 in Vergrößerung, wobei die Verkleidung des Teleskopauszugs weggelassen ist;
- Fig. 4: zeigt einen Schnitt gemäß der Linie IV-IV aus Fig. 3, wobei die Arretierung gelöst ist;
- Fig. 5: zeigt ebenfalls den Schnitt IV-IV aus Fig. 3, wobei jedoch die Arretierung geschlossen ist.

Das Führerhaus des Fahrzeugs, z. B. eines Busses, ist mit 1 bezeichnet. Das Führerhaus 1 zeigt einen Zutrittsbereich 2 demgegenüber sich die mit 10 bezeichnete Fahrerschutzkabine befindet. Die Fahrerschutzkabine 10 weist eine Rückwand 11 auf, an die sich in der beispielhaften Darstellung winklig dazu eine feststehende Wand 15 anschließt. Grundsätzlich gelten die nachstehenden Ausführungen auch für eine Wand, die Bestandteil der Fahrertür ist, und die somit schwenkbeweglich ist.

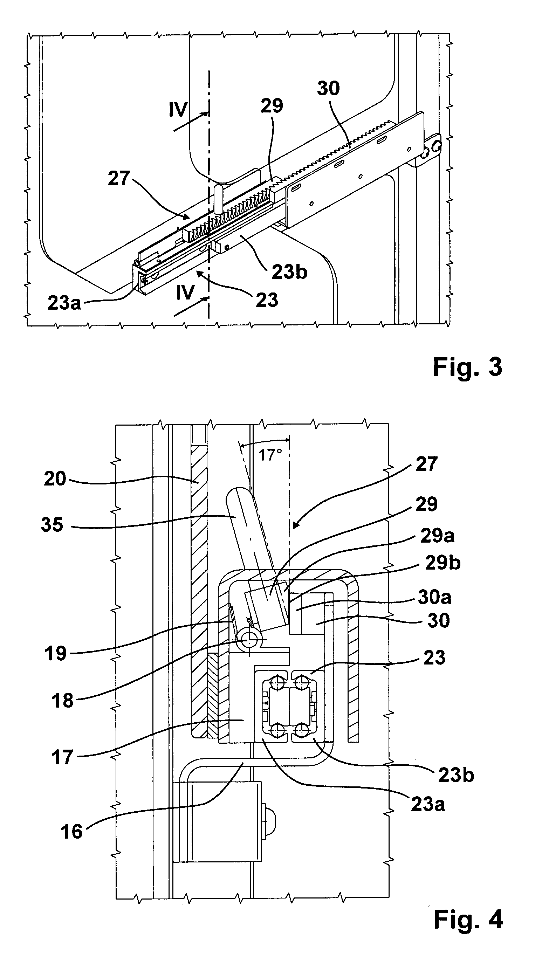

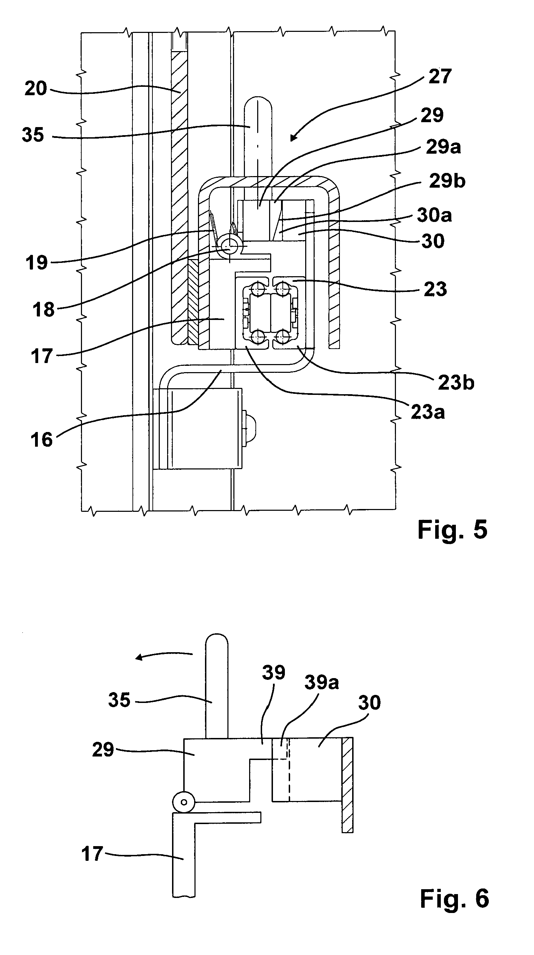

Diese feststehende Wand 15, die auch als Glasscheibe ausgebildet sein kann, nimmt die insgesamt mit 20 bezeichnete Schutzscheibe verschieblich auf. Die Verbindung mit der Schutzscheibe 20 und der feststehenden Wand 15 erfolgt am oberen Ende durch einen oberen Teleskopauszug 21 und am unteren Ende durch einen unteren Teleskopauszug 23, wobei der Teleskopauszug 23 durch eine Verkleidung 25 abgedeckt ist. Bei der Darstellung gemäß Fig. 3 ist die Verkleidung abgenommen. Erkennbar weist der untere Teleskopauszug 23, mit den beiden Teleskopschienen 23a, 23b, die mit dem Teleskopauszug 23 verbundene Arretiereinrichtung 27 auf. Die Arretiereinrichtung 27 umfasst die beiden Zahnstangen 29 und 30, wobei die eine erste Zahnstange 29 mit der ersten Teleskopschiene 23a und die zweite Zahnstange 30 mit der zweiten Teleskopschiene 23b verbunden ist. Der Aufbau der Arretiereinrichtung ergibt sich im Einzelnen in Anschauung der Fig. 4 und 5.

So weist die feststehende Wand 15 einen Halter 16 auf, wobei der Halter 16 die zweite Teleskopschiene 23b aufnimmt. An dem Halter 16 ist darüber hinaus an seinem oberen Ende die zweite Zahnstange 30 angeordnet.

Die mit 20 bezeichnete Schutzscheibe steht mit einem Sattel 17 in Verbindung, wobei der Sattel 17 das Scharnier 18 trägt. Das Scharnier 18 steht mit der ersten Zahnstange 29 in Verbindung. Das Scharnier 18 besitzt die Schenkelfeder 19, die dafür sorgt, dass die erste Zahnstange 29 zur wirksamen Arretierung in Eingriff mit der zweiten Zahnstange 30 verbleibt, wie sich dies aus Fig. 5 ergibt.

Der Sattel 17 trägt darüber hinaus die erste Teleskopschiene 23a, die zusammen mit der zweiten Teleskopschiene 23b, die an dem Halter 16 fixiert ist, den Teleskopauszug 23 bildet.

Zum Verschwenken der ersten Zahnstange dient der an der ersten Zahnstange angeordnete Hebel 35.

Betrachtet man nunmehr die erste Zahnstange 29 und die zweite Zahnstange 30, so erkennt man, dass die zweite Zahnstange 30 eine über die Höhe der Zahnstange gerade verlaufende zweite Zahnreihe 30a aufweist, wohingegen die erste Zahnstange 29 eine erste Zahnreihe 29a besitzt, die durch eine auf die Zahnstange zulaufende Schräge 29b gekennzeichnet ist. Die Schräge macht hierbei etwa 2/3 der Höhe der Zahnreihe 29a aus. In der Darstellung gemäß Fig. 5 stehen die erste und die zweite Zahnstange 29, 30 miteinander in Eingriff. Wird der Hebel 35 vor einen Winkel α in eine Richtung verschwenkt, wie in Fig. 4 dargestellt, gelangen die beiden Zahnstangen 29, 30 außer Eingriff. Durch die Schräge 29b der ersten Zahnstange 29 geschieht dies bei einem relativ geringen Schwenkwinkel α, wobei der Schwenkwinkel α etwa dem Winkel der Schräge 29b entspricht.

Eine zweite Ausführungsform (Fig. 6), bei dem die eine erste Zahnstange eine erste Zahnreihe derart aufweist, dass diese bei einem vorgegebenen Schwenkwinkel außer Eingriff mit der zweiten Zahnung der anderen zweiten Zahnstange gelangt, zeichnet sich dadurch aus, dass die erste Zahnstange 29 einen Vorsprung 39 zeigt, der endseitig die Zahnreihe 39a besitzt. Die Erstreckung des Vorsprunges 39 in Richtung auf die zweite Zahnstange 30 und seine Höhe ist hierbei derart, dass bei Verschwenkung des Hebels 35 mit der Zahnstange 29, der Vorsprung 39 mit der Zahnreihe 39a außer Eingriff mit der zweiten Zahnreihe 30a der zweiten Zahnstange 30 gelangt, ohne dass der übrige Teil der ersten Zahnstange 29 in Kollision mit der zweiten Zahnstange 30 gerät.

### Bezugszeichenliste:

- 1: Führerhaus
- 2: Zutrittsbereich (im Führerhaus)
- 10: Fahrerschutzkabine
- 11: Rückwand
- 15: Wand
- 16: Halter
- 17: Sattel
- 18: Scharnier
- 19: Schenkelfeder
- 20: Schutzscheibe
- 21: oberer Teleskopauszug
- 23: unterer Teleskopauszug
- 23a: erste Teleskopschiene
- 23b: zweite Teleskopschiene
- 25: Verkleidung
- 27: Arretiereinrichtung
- 29: erste Zahnstange
- 29a: erste Zahnreihe
- 29b: Schräge der Zahnreihe
- 30: zweite Zahnstange
- 30a: zweite Zahnreihe
- 35: Hebel
- 39: Vorsprung
- 39a: Zahnreihe des Vorsprungs

## Patentansprüche

1. Fahrerschutzkabine (10) eines Fahrzeugs des öffentlichen Personentransports, z. B. eines Busses, wobei die Fahrerschutzkabine (10) auf der dem Eingang des Fahrzeugs zugewandten Seite mindestens eine Wand (15) aufweist, wobei an der Wand (15) mindestens eine Schutzscheibe (20) durch mindestens einen Teleskopauszug (21, 23) parallel zu der Wand verschieblich angeordnet ist, wobei der mindestens eine Teleskopauszug (21, 23) eine Arretiereinrichtung (27) zur Fixierung der Schutzscheibe (20) in unterschiedlichen Stellungen relativ zur Wand (15) aufweist,
**dadurch gekennzeichnet,**
**dass** die Arretiereinrichtung (27) mindestens zwei Zahnstangen (29, 30) umfasst, die miteinander in Eingriff bringbar sind.

2. Fahrerschutzkabine (10) nach Anspruch 1,
**dadurch gekennzeichnet,**
**dass** der mindestens eine Teleskopauszug (23) mindestens zwei Teleskopschienen (23a, 23b) umfasst, wobei die eine erste Zahnstange (29) mit der einen ersten Teleskopschiene (23a) des Teleskopauszugs (23) und die andere zweite Zahnstange (30) mit der anderen zweiten Teleskopschiene (23b) des Teleskopauszugs (23) verbunden ist, wobei zumindest eine der Zahnstangen (29, 30) durch ein Schwenkglied schwenkbeweglich mit der entsprechenden Teleskopschiene (23a) des Teleskopauszugs (23) derart verbunden ist, dass bei Verschwenkung der mindestens einen ersten Zahnstange (29), die Zahnstangen (29, 30) außer Eingriff miteinander bringbar sind.

3. Fahrerschutzkabine (10) nach Anspruch,
**dadurch gekennzeichnet,**
**dass** das Schwenkglied unter der Last einer Feder steht.

4. Fahrerschutzkabine (10) nach Anspruch 2 oder 3,
**dadurch gekennzeichnet,**
**dass** das Schwenkglied als Scharnier (18) ausgebildet ist.

5. Fahrerschutzkabine (10) nach Anspruch 4,
**dadurch gekennzeichnet,**
**dass** das Scharnier (18) eine Schenkelfeder (19) aufweist.

6. Fahrerschutzkabine (10) nach einem der voranstehenden Ansprüche,
**dadurch gekennzeichnet,**
**dass** zumindest die eine erste Zahnstange (29) eine erste Zahnreihe (29a) derart aufweist, dass diese bei einem vorgegebenen Schwenkwinkel außer Eingriff mit der zweiten Zahnreihe (30a) der anderen zweiten Zahnstange (30) gelangt.

7. Fahrerschutzkabine (10) nach Anspruch 6,
**dadurch gekennzeichnet,**
**dass** die zumindest eine erste Zahnstange (29) über einen Teil der Höhe der ersten Zahnreihe (29a) eine auf diese Zahnstange (29) zulaufende Schräge (29b) aufweist, wobei der Winkel der Schräge (29b) etwa dem maximalen Schwenkwinkel dieser einen ersten Zahnstange (29) entspricht.

8. Fahrerschutzkabine (10) nach Anspruch 6,
**dadurch gekennzeichnet,**
**dass** die eine erste Zahnstange (29) eine erste Zahnreihe (29a) aufweist, deren Höhe geringer ist, als die Zahnreihe der zweiten Zahnstange (30).

9. Fahrerschutzkabine (10) nach Anspruch 8,
**dadurch gekennzeichnet,**
**dass** die Zahnreihe (39a) der einen ersten Zahnstange (29) nach Art eines Vorsprungs (39) ausgebildet ist.

10. Fahrerschutzkabine (10) nach Anspruch 9,
**dadurch gekennzeichnet,**
**dass** die seitliche Erstreckung des Vorsprungs (39) auf die andere zweite Zahnstange (30) zu derart ist, dass bei Verschwenkung der einen ersten Zahnstange (29) die Zahnreihen der beiden Zahnstangen (29, 30) außer Eingriff gelangen.

11. Fahrerschutzkabine (10) nach einem der voranstehenden Ansprüche,
**dadurch gekennzeichnet,**
**dass** die Wand (15) als Glasscheibe ausgebildet ist.

12. Fahrerschutzkabine (10) nach einem der voranstehenden Ansprüche,
**dadurch gekennzeichnet,**
**dass** die Wand (15) feststehend angeordnet ist.

13. Fahrerschutzkabine (10) nach einem der Ansprüche 1 bis 11,
**dadurch gekennzeichnet,**
**dass** die Wand (15) Bestandteil der Fahrertür ist.
